# EUROPEAN PATENT SPECIFICATION

(11) **EP 2 554 310 B1**
(45) Date of publication and mention of the grant of the patent: **20.01.2016**
(21) Application number: 12177637.1
(22) Date of filing: 24.07.2012
(51) Int. Cl.: B23C 5/28, B23B 51/06, B23Q 11/10, B23C 5/10

(54) **Tip holder**
Spitzenhalter
Porte-plaquettes

(30) Priority: 03.08.2011 JP 2011170120
(43) Date of publication of application: 06.02.2013
(73) Proprietor: Fuji Jukogyo Kabushiki Kaisha, Tokyo 150-8554 (JP)
(72) Inventor: OMAGARI, Kosuke, Tokyo, 150-8554 (JP)
(74) Representative: Vossius & Partner Patentanwälte Rechtsanwälte mbB

(56) References cited:
- EP-A2- 0 186 067
- FR-A- 1 173 190
- US-A1- 2006 053 987
- US-A1- 2010 254 772
- DERNOGA ET AL: "Internal - Cooled Bits", AMERICAN MACHINIST, NEW YORK, NY, US, vol. 95, 2 April 1951 (1951-04-02), page 66, XP002167495,

## Description

The present invention relates to a tip holder having the features of claim 1.

Milling is carried out generally for planar cutting of a metal object. Milling is a method wherein a tip holder to which multiple throw away tips are fastened around the outer circumference thereof is rotated so as to cut an object into a planar shape. In the milling process, the tip holder rotates at high speed, generating high temperatures in the cutting portions of the throw away tips, thereby causing fast wear of the tool.

In order to prevent such tool wear, it is necessary to cool the tool while being used. In a typical milling process, the tool is cooled by directly spraying the tool with cutting oil that has a cooling effect (see Japanese Patent No. 4,690,439). However, in this method, the cutting oil is sprayed not only onto the throw away tips but also the object being cut. Thus, it is not possible to cool only the tool. Moreover, in this method, the contact surface between the cutting oil and the tool is small, and the contact time is short. Therefore, it is difficult to enhance the cooling effect for the tool.

The inventors herein have investigated a method to enhance the cooling effect for cooling the tool by cooling the throw away tips from the inside (rear) of the tip holder. However, unlike in a lathe apparatus, in a throw away type rotary cutting apparatus for milling, a tip holder to which throw away tips are fastened rotates. Therefore, it is difficult to supply a coolant to such rotating throw away tips. Furthermore, recovery of the coolant after cooling is problematic.

EP 0 186 067 describes a tool for chip cutting, especially for turning and milling, comprises of a cutting plate with an inner chamber which is connected to a supply channel and a discharge channel, and a supply pipe and a discharge pipe mounted in a passage constructed in the tool body for circulation of the cooling medium and supplying the cooling medium directly to the active cutting edge of the cutting plate or the part of the cutting edge which is in operation. The cooling medium is supplied into the tool from the machine tool or from an external source by means of a pump. Further related technologies are shown in FR 1 173 190, US 2010/254772, DERNOGA ET AL: "Internal - Cooled Bits" and US 2006/053987.

DERNOGA ET AL: "Internal - Cooled Bits" suggests a solution for removing heat from the drilling tool by running water through cooling holes in the tool itself. By drilling two longitudinal holes into the bit from the rear end, the holes can be countersunk, suitable brass fittings can be added to retain the coolant hoses and a connecting hole can be drilled to intersect the two main holes before the carbide tip is brazed on. Another variation on his idea is to fit a drill with a radiator; this can be built up from disks made to fit the drill tightly.

In view of the above situation, the objective of the present invention is to provide a throw away type rotary cutting apparatus and tip holder that are capable of improving the cooling efficiency by cooling the throw away tips from the inside of the tip holder regardless of whether or not the tip holder is rotating. This object is achieved by a tip holder as defined in claim 1. Other preferred features of the invention are defined in the dependent claims.

With the present invention, the cooling efficiency for cooling the throw away tip can be improved regardless of whether the tip holder is rotating.

Other features and advantages of the present invention will become apparent from the following detailed description, taken in conjunction with the accompanying drawings, which illustrate, by way of example, the principles of the invention.
FIG. 1 is a drawing for explaining the basic construction of a throw away type rotary cutting apparatus.
FIG. 2 is a perspective view illustrating the external appearance of a tip holder.
FIG. 3 is a drawing illustrating a top view and front view of a tip holder.
FIGS. 4A not falling under the scope of the claims to 4C are cross-sectional views of section AA in FIG. 2, and explain the held state of throw away tips by the support section.
FIG. 5 is a perspective view that illustrates the external appearance of the tip holder.
FIG. 6 is a drawing for explaining the plan view structure of the tip holder

A preferred embodiment of the present invention will be explained in detail with reference to the accompanying drawings. The dimension, materials and other detailed numerical values given in the embodiment are only examples for making it easier to understand the invention, and unless specially indicated, do not limit the scope of present invention. In this specification and drawings, the same reference numbers will be given to elements that essentially have the same function and construction, and any redundant explanation will be omitted, and elements that are not directly related to the present invention will be omitted from the drawings.

In the embodiment, the overall construction of a throw away type rotary cutting apparatus 1 that is represented by a drill, end mill, face mill and plunger is explained, after which a chip holder that is used in milling will be described in detail.

Throw Away Type Rotary Cutting Apparatus

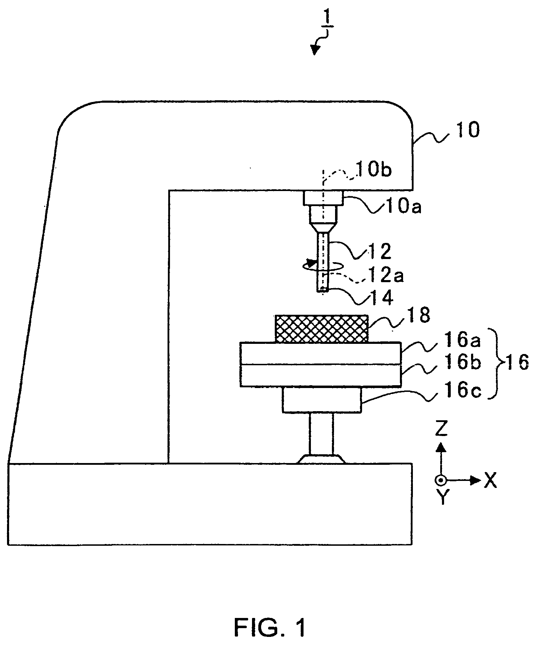

FIG. 1 is a drawing for explaining the basic construction of a throw away type rotary cutting apparatus 1. The throw away type rotary cutting apparatus 1 comprises a drive unit 10, a tip holder 12, throw away tips 14, and a mounting table 16, and for example, performs planar cutting of an object that is made of a metallic material.

The drive unit 10 comprises, for example, an electric motor and a reduction gear that reduces the rpm (these are not illustrated in the figure), and this drive unit 10 supports and rotates the tip holder 12 by way of a spindle head 10a.

The tip holder (face milling cutter) 12 is formed into a cylindrical shape and is fastened to the spindle head 10a so that the center axis (axis of rotation 12a) of that cylindrical coincides with the axis of rotation 10b of the drive unit 10. Uniformly spaced multiple throw away tips 14 are fastened around the outer circumference of the end section (milling head) of the tip holder 12 on the opposite side from the spindle head 10. The tip holder 12 is mainly used for forming a comparatively large flat surface on an object 18 being cut. In this embodiment, an example of a cylindrical shaped tip holder 12 is given. However, as long as the throw away tips 14 can be arranged so as to be uniformly spaced with respect to the axis of rotation 12a, it is possible to use tip holders 12 with various shapes, such a circular disk shape, conical shape, or the like.

The throw away tips (may also be called tool tips or inserts) 14 are formed using comparatively thick flat plate, and cutting edges are formed on at least one end section. The throw away tips 14 are expendable parts, so that they are fastened to the tip holder so as to be removable. As a throw away tip 14 becomes dull over time, the user first turns the tip around to the spare cutting edge that is formed on the other end section, and when both cutting edges wear out, the user replaces the throw away tip 14 with a new one. Here, an example is given wherein tips having a square shape are used as the throw away tips 14, and are fastened with bolts. However, the shape and fastening method are not limited, and it is possible to use various shapes and fastening methods.

The mounting table 16 is a table on which an object 18 to be cut is mounted, and is constructed such that it is possible to secure the object 18 with a vise (not illustrated in the figure) or the like. The mounting table 16 also comprises a table 16a that is capable of relative movement in the X direction with respect to the tip holder 12, a saddle 16b that is capable of relative movement in the Y direction, and a knee 16c that is capable of relative movement is the Z direction, so cutting of the object 18 can be performed at an arbitrary planar position and height.

In the milling process by this kind of throw away type rotary cutting apparatus 1, a planar surface is cut on the object 18 with good precision by the tip holder 12 rotating at high speed. When doing this, the cutting edges of the throw away tips 14 become extremely hot. The objective of this embodiment is to improve the cooling efficiency by cooling the throw away tips 14 from the inside of the rotating tip holder 12 in order to prevent wear of the throw away tips 14 as the temperature increases. A tip holder 12 that accomplishes this objective is described below.

### Tip Holder 12

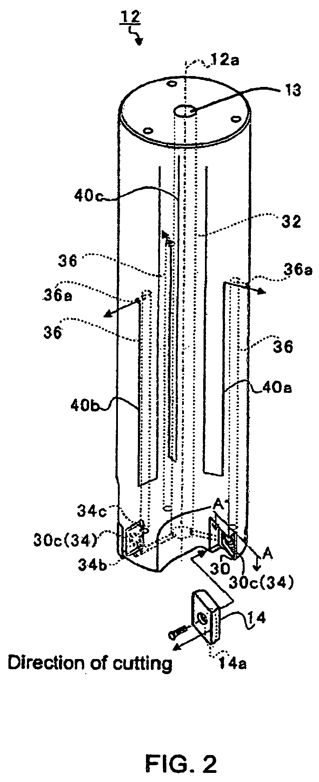

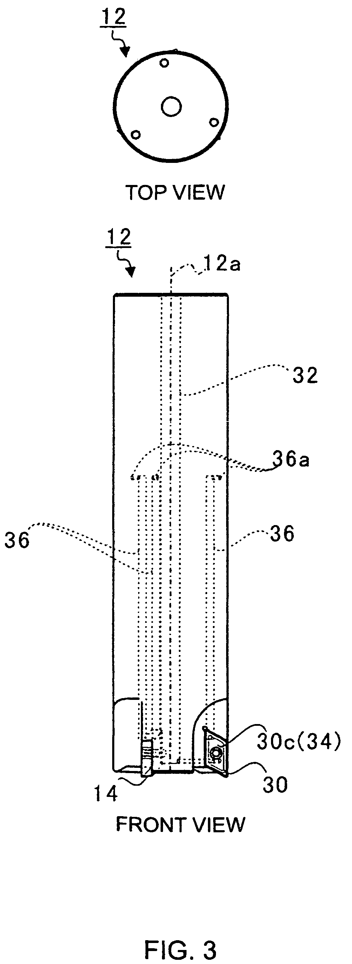

FIG. 2 is a perspective drawing illustrating the external appearance of the tip holder 12, and FIG. 3 is an explanative drawing illustrating a top view and a front view of the tip holder 12. Here, the tip holder 12 has three throw away tips 14, and circulation paths for a coolant (described later) are formed for each of these throw away tips 14. In FIG. 2 and FIG. 3, for convenience of the explanation, the functional parts of at least one of the circulation paths are illustrated, and because the functions of the other are essentially the same, they are omitted in the figure.

Support sections 30 support the throw away tips 14 so that the cutting direction of the cutting edge 14a of the throw away tip 14 is in the circumferential direction of the tip holder 12. In this way, the throw away tips 14 function as peripheral cutting edges of the tip holder 12.

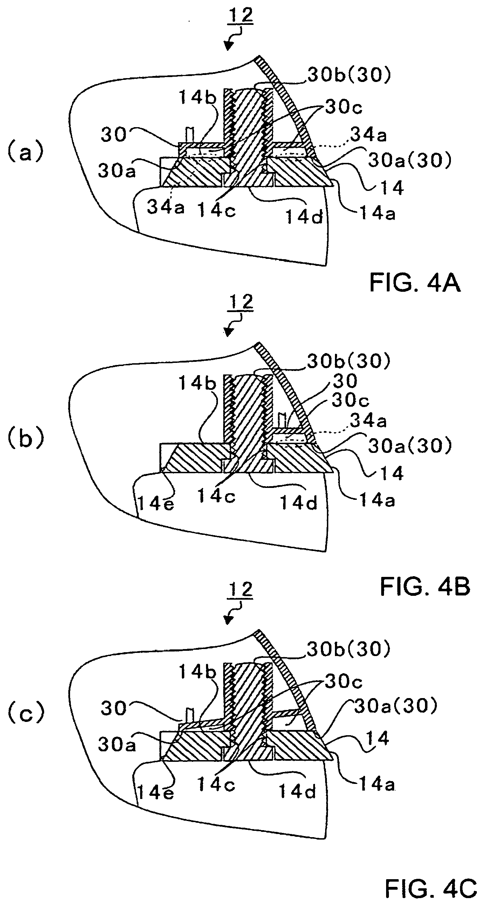

FIGS. 4A not falling under the scope of the claims - 4C are cross-sectional views of section AA in FIG. 2, and are for explaining the held state of the throw away tips 14 by the support sections 30. As illustrated in FIG. 4A not falling under the scope of the claims and FIG. 2, the support section 30 is formed into a box shape that is open on the installation side of the throw away tip 14. By the installation surface 14b of the throw away tip 14 coming in contact (close contact) with the edge of the opening (seat) having high surface precision, shaking of the throw away tip 14 is prevented.

Moreover, an insertion hole 30b, in which screw threads are cut, is formed in the support section 30. The throw away tip 14 is supported and held by tightly screwing a bolt 14d, which is inserted through a through hole 14c in the throw away tip 14 into the insertion hole 30b.

Furthermore, by the support section 30 coming in contact with the throw away tip 14, a sealed space 30c is formed on the inside of the box shape, which can function as a flow path for the coolant that will be described later. The edge 30a of the opening and the installation surface 14b of the throw away tip 14 has high surface precision, so that the coolant that flows in the sealed space 30c does not leak out.

Returning to FIG. 2 and FIG. 3, an inlet path 32 is formed as a circular hole in the position of the axis of rotation 12a of the tip holder 12 so as to extend vertically downward from the center of the top surface of the tip holder 12, and guides the coolant that is supplied from the drive unit 10 side to a heat exchange section 34. Here, a liquid gas such as liquid nitrogen is used as the coolant.

The heat exchange section 34 is formed as part of the flow path for the coolant (sealed space 30c) using the box shape of the support section 30 wherein the opening 34a (see FIG. 4) faces the throw away tip 14, and performs heat exchange between the coolant entering in from the inlet path 32 and the throw away tip 14.

As described above, when the edge 30a of the opening of the support section 30 (see FIG. 4) comes in contact with the installation surface 14b of the throw away tip 14, a box shaped sealed space 30c is formed on the inner circumferential side. Here, one end section 34b of this sealed space 30c is connected to the inlet path 32, and a discharge path 36 (to be described later) is connected to the other end section 34c of this sealed space 30c. Therefore, the coolant is temporarily held inside the sealed space 30 of the heat exchange section 34, and after heat exchange between the throw away tip 14 and the coolant is sufficiently performed, the coolant is discharged.

Moreover, by the coolant entering from the one end section 34b that is located vertically below the sealed space 30c and being discharged from the other end section 34c that is located vertically above the sealed space 30c, the direction of flow of the coolant is the same as the flow vertically upward due to the specific gravity of the coolant that has absorbed heat. In this way, it is possible to prevent the flow of the coolant before heat exchange and the coolant after heat exchange from becoming mixed flow, and thus it is possible to smoothly perform heat exchange.

Furthermore, the opening 34a of the heat exchange section 34 comes in contact with the area of the installation surface 14b of the throw away tip 14 except for the site that corresponds to the edge 30a of the opening, so it is possible to maintain a contact surface over a large area with the throw away tip 14. The coolant that flows through the opening section 34a comes in direct contact with the installation surface 14b of the throw away tip 14, so it becomes possible to improve the cooling efficiency.

Here, as illustrated in FIG. 4A not falling under the scope of the claims, an example of the opening 34a of the sealed space 30c coming in contact over a wide area with the installation surface 14b of the throw away tip 14 is given. However, the heat exchange section 34 is not limited to the case of cooling the entire surface of the installation surface 14b of the throw away tip 14, and as illustrated in FIG. 4B, it is also possible for the opening 34a to face at least the area close to the cutting edge 14a more than the other end section 14e positioned at the throw away tip 14 opposite to the cutting edge 14a, and to cool mainly the cutting edge 14a.

In this way, by cooling at least the area that is close to the cutting edge 14a, which is the cutting site, it is possible to improve the cooling efficiency of the occupied volume of the sealed space 30c.

Moreover, as illustrated in FIG. 4C, the heat exchange section 34 can be formed such that the volume in unit area (installation surface 14b) of the sealed space 30c becomes larger closer to the cutting edge 14a than at the other end section 14e opposite to the cutting edge 14a. As a result, it is possible to increase the ability to cool the area having a high temperature distribution (area near the cutting edge 14a), and overall it is possible to obtain a higher cooling effect.

The discharge path 36 is formed as a circular hole that is parallel with the inlet path 32 and that extends vertically upward from the heat exchange section 34, and discharges the coolant after heat exchange has been performed by the heat exchange section 34 to the atmosphere from a discharge-side end section 36a that is formed around the outer circumference of the tip holder 12.

In this way, the inlet path 32, heat exchange section 34 and discharge path 36 form a circulation path for the coolant inside the tip holder 12. Moreover, multiple throw away tips 14 (three in this embodiment) are fastened to the tip holder 12, so a circulation path (40a, 40b, 40c) is prepared for each of the throw away chips 14. These three circulation paths 40a, 40b, 40c branch in a radial shape toward three heat exchange sections 34 from a common inlet path 32, and independently connect to three discharge paths 36.

Conventionally, cooling oil having a cooling effect is directly injected onto the throw away tip 14 or object 18 being cut, and the cutting oil after heat exchange remained as is near the throw away tip 14 or object 18 being cut. In this embodiment, the coolant after heat exchange is discharged at a position (discharge-side end section 36a) separated from the throw away tips 14, so it is possible to prevent the throw away tips 14 or the object 18 being cut from coming in contact with the coolant, and thus it is possible to improve the maintenance without the coolant mixing with the cutting chips.

Furthermore, by lengthening the distance of the space between the discharge-side end section 36a and heat exchange section 34, it becomes possible to suppress the heat of the outside air from passing through the discharge path 36 and being transferred to the heat exchange section 34, and thus efficient heat exchange is possible. Even in the case where it is desired to keep the object 18 being cut in a high-temperature state, efficient milling is possible.

In the embodiment described above, a medium such as a liquid gas, e.g., liquid nitrogen, which becomes gaseous at least after heat exchange, or a medium that can be maintained in a gaseous state from before heat exchange is selected as the coolant. Therefore, at the instant when being discharged from the discharge-side end section 36a, the coolant is a gas and can be released to the atmosphere.

Moreover, the discharge path 36 is shaped such that after extending vertically upward, changes direction to the radial direction and extends to the discharge-side end section 36a. Therefore, by centrifugal force acting on the coolant due to the rotation of the tip holder 12, the gaseous coolant is discharged smoothly and far away.

### Processing of the Tip Holder 12

Next, the processing performed on the tip holder 12 in order to manufacture the tip holder 12 described above will be explained.

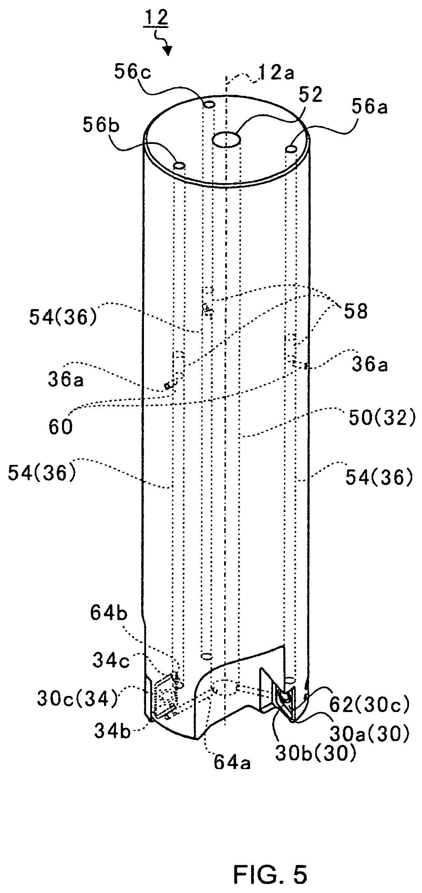

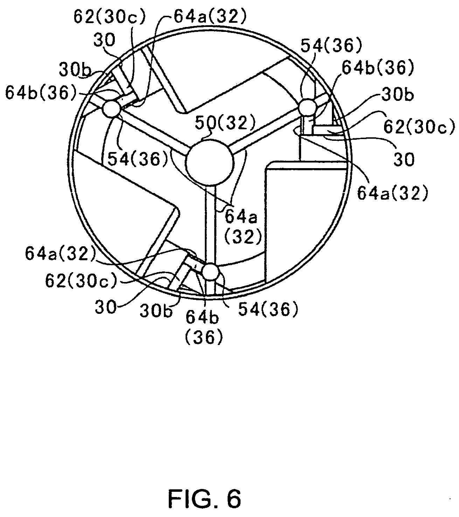

FIG. 5 is a perspective drawing illustrating the external appearance of the tip holder 12, and FIG. 6 is a drawing for explaining the plane view structure of the tip holder 12.

First, a drill hole (circular hole) 50 that corresponds to the inlet path 32 is formed. This hole is located along the position of the axis of rotation 12a of the tip holder 12, and extends vertically downward from the center of the top surface of the tip holder 12 to the portion that corresponds to the bottom of the sealed space 30c of the heat exchange section 34.

This drill hole 50 (inlet path 32) is a hole common with the multiple circulation paths for the coolant, so the diameter is formed such that it is large enough for sufficient coolant to reach all of the circulation paths. However, in the case where, in an existing tip holder that has a mechanism for spraying cutting oil onto the throw away tips 14 from the exposed surface side, processing has already been performed to form an inlet path for supplying oil along the axis of rotation 12a, it is possible to use that inlet path to form the drill hole 50 (inlet path 32) of the present invention. By effectively using an existing structure, it is possible to manufacture a tip holder 12 at low cost.

Next, drill holes (circular holes) 54 are formed corresponding to the discharge paths 36. These holes are formed so as to extend vertically downward from arbitrary positions 56a, 56b, 56c at uniform distances from the center of the top surface of the tip holder to a portion that corresponds with the top of the sealed space 30c of the heat exchange sections 34. These drill holes 54 (discharge paths 36) need to extend from the heat exchange sections 34 to the discharge-side end sections 36a, so cylindrical shaped sealing members 58 are inserted from the top surface side of the drill holes 54 to close the openings, and that spatially separates the top of the drilling holes 54. By forming through holes 60 that pass through from the discharge-side end sections 36a on the outer circumferential surface to the drill holes 54, L-shaped discharge paths are formed.

Next, support sections 30 are formed at the installation positions of the throw away tips 14, and by coming in contact with the throw away tips 14 except at the edges 30a of the openings and the insertion holes 30b, grooves 62 that become the sealed spaces 30c are formed (as a result, the edges 30a of the openings and the insertion holes protrude). Next, through holes 64b are formed from the other end sections 34c to the discharge paths 36. In this way, the inlet path 32, heat exchange sections 34, and discharge paths 36 for circulation paths for the coolant.

With the throw away type rotary cutting apparatus 1 explained above, coolant is introduced from the center of rotation of tip holder 12, so regardless of whether the tip holder is rotating, it is possible to adequately cool the throw away tips 14 from the inside of the tip holder 12, and thus improve the cooling efficiency. Moreover, the coolant after heat exchange is discharged from the outer circumferential surface in a gaseous state, so it is possible to avoid contact between the coolant and the throw away tips 14 and object 18 being cut, and thus maintenance can be improved.

Furthermore, it is possible to process and use the tip holder 12 and other parts of an existing throw away type rotary cutting device for milling as is, so special equipment is not necessary, and thus it is possible to suppress wear of the throw away tips 14 at low cost.

It is to be understood that the above-described embodiment is illustrative of only a few of the many possible specific embodiments that can represent applications of the principles of the invention. Numerous and varied other arrangements can be readily devised by those skilled in the art without departing from the scope of the invention as defined by the claims.

For example, in the embodiment described above, an example is explained wherein in the heat exchange section 34, the coolant was brought into contact with the installation surface 14b of the throw away tips 14. However, it is also possible to provide a material having a high degree of thermal conductivity between both. Moreover, it is also possible to drill a hole in the throw away tip 14 itself and circulate coolant that has entered the inlet path 32 though that hole.

The present invention can be applied to a tip holder to which throw away tips are fastened around the outer circumference thereof, and to a throw away type rotary cutting apparatus for cutting an object using the tip holder.

## Claims

1. A tip holder that is formed in a cylindrical shape having a 1^{st} end and a 2^{nd} end, and that is adapted to hold a throw away tip (14); said tip holder (12) comprising:
(a) a support section (30) that is formed on the 1^{st} end of the tip holder (12) and adapted to hold the throw away tip (14), wherein the support section (30) is formed into a box shape with an opening (34a) on the installation side of the throw away tip (14) and is configured to come in contact with the throw away tip (14);
(b) an inlet path (32) that is formed along a center axis (12a) inside the tip holder (12), and has an aperture (13) on the 2^{nd} end of the tip holder, wherein coolant is externally supplied to the inlet path (32) through the aperture (13) ;
(c) a heat exchange section (34) that is formed as part of the flow path for the coolant using the box shape of the support section (30) with the opening (34a) and connects with the inlet path (32), wherein heat exchange between the coolant that is supplied from the inlet path (32) and the throw away tip (14) is performed in the heat exchange section (34); and
(d) a discharge path (36) that is formed inside the tip holder (12), connects with the heat exchange section (34), and discharges the coolant after the heat exchange,
(e) wherein the heat exchange section (34) comprises a sealed space (30c) arranged between the support section (30) and an installation surface (14b) of the throw away tip (14), and
(i) wherein the opening (34a) faces at least the area closer to the cutting edge (14a) than to an end section (14e) of the throw away tip (14) other than the cutting edge (14a)
or
(ii) wherein the volume of the sealed space (30c) closer to the cutting edge (14a) is greater than the volume of the sealed space (30c) at the end section (14e) other than the cutting edge (14a) of the throw away tip (14).

2. The tip holder according to claim 1, wherein
the discharge path has a 1^{st} end and a 2^{nd} end, wherein the 1^{st} end connects with the heat exchange section (34), and the 2^{nd} end discharges the coolant after the heat exchange.

3. The tip holder according to claim 2, wherein
the 2^{nd} end of the discharge path (36) is configured to have an opening toward the outer circumference of the tip holder; and
the coolant becomes a gas at least after the heat exchange, and it is discharged to the atmosphere from the other end of the discharge path.

4. The tip holder according to claim 1, 2 or 3, wherein
the heat exchange section (34) has a flow path that brings the coolant that is supplied from the inlet path (32) in contact with the throw away tip (14).

5. The tip holder according to claim 1, 2, 3 or 4, wherein
the heat exchange section (34) is formed so that the coolant that is supplied from the inlet path (32) comes in contact with a portion close to the cutting edge (14a) of the throw away tip (14).

6. A throw away type rotary cutting apparatus (1) for cutting an object (18) by a cutting edge (14a) that is formed on a throw away tip (14), comprising:
a mounting table (16) to which the object (18) being cut is fastened;
a tip holder (12) according to any one of claims 1 to 5,
a drive section (10) that holds the 2^{nd} end side of the tip holder (12) while the 1^{st} end of the tip holder faces the object that is fastened to the mounting table, and drives and rotates the tip holder around the center axis (12a) thereof; and
a coolant supply unit for supplying coolant to the inlet path (32) through the opening of the tip holder.

## Patentansprüche

1. Schneidplattenhalter, der in einer zylindrischen Form mit einem ersten und einem zweiten Ende ausgebildet und dazu geeignet ist, eine Wegwerf-Schneidplatte (14) zu halten, wobei der Schneidplattenhalter (12) aufweist:
(a) einen Halteabschnitt (30), der am ersten Ende des Schneidplattenhalters (12) ausgebildet und dazu geeignet ist, die Wegwerf-Schneidplatte (14) zu halten, wobei der Halteabschnitt (30) gehäuseförmig mit einer Öffnung (34a) auf der Montageseite der Wegwerf-Schneidplatte (14) ausgebildet und dafür konfiguriert ist, mit der Wegwerf-Schneidplatte (14) in Kontakt zu kommen;
(b) einen Einlasspfad (32), der entlang einer Mittelachse (12a) im Inneren des Schneidplattenhalters (12) ausgebildet ist und eine Öffnung (13) am zweiten Ende des Schneidplattenhalters aufweist, wobei dem Einlasspfad (32) über die Öffnung (13) ein Kühlmittel extern zugeführt wird;
(c) einen Wärmeaustauschabschnitt (34), der als Teil des Strömungspfades des Kühlmittels unter Verwendung der Gehäuseform des Halteabschnitts (30) mit der Öffnung (34a) ausgebildet und mit dem Einlasspfad (32) verbunden ist, wobei im Wärmeaustauschabschnitt (34) ein Wärmeaustausch zwischen dem vom Einlasspfad (32) zugeführten Kühlmittel und der Wegwerf-Schneidplatte (14) stattfindet; und
(d) einen Ausgabepfad (36), der im Inneren des Schneidplattenhalters (12) ausgebildet ist, mit dem Wärmeaustauschabschnitt (34) verbunden ist und das Kühlmittel nach dem Wärmeaustausch ausgibt,
(e) wobei der Wärmeaustauschabschnitt (34) einen abgedichteten Raum (30c) aufweist, der zwischen dem Halteabschnitt (30) und einer Montagefläche (14b) der Wegwerf-Schneidplatte (14) angeordnet ist, und
(i) wobei die Öffnung (34a) mindestens einem Bereich zugewandt ist, der näher an der Schneidkante (14a) liegt als an einem von der Schneidkante (14a) verschiedenen Endabschnitt (14e) der Wegwerf-Schneidplatte (14), oder
(ii) wobei das Volumen des abgedichteten Raums (30c) in der Nähe der Schneidkante (14a) größer ist als das Volumen des abgedichteten Raums (30c) am von der Schneidkante (14a) der Wegwerf-Schneidplatte (14) verschiedenen Endabschnitt (14e).

2. Schneidplattenhalter nach Anspruch 1, wobei
der Ausgabepfad ein erstes und ein zweites Ende aufweist, wobei das erste Ende mit dem Wärmeaustauschabschnitt (34) in Kontakt steht und das zweite Ende das Kühlmittel nach dem Wärmeaustausch ausgibt.

3. Schneidplattenhalter nach Anspruch 2, wobei
das zweite Ende des Ausgabepfades (36) derart konfiguriert ist, dass es eine zum Außenumfang des Schneidplattenhalter hin gerichtete Öffnung aufweist, und
das Kühlmittel mindestens nach dem Wärmeaustausch zu einem Gas wird und vom anderen Ende des Ausgabepfades an die Atmosphäre ausgegeben wird.

4. Schneidplattenhalter nach Anspruch 1, 2 oder 3, wobei
der Wärmeaustauschabschnitt (34) einen Strömungspfad aufweist, der das vom Einlasspfad (32) zugeführte Kühlmittel mit der Wegwerf-Schneidplatte (14) in Kontakt bringt.

5. Schneidplattenhalter nach Anspruch 1, 2, 3 oder 4, wobei
der Wärmeaustauschabschnitt (34) derart ausgebildet ist, dass das vom Einlasspfad (32) zugeführte Kühlmittel mit einem Abschnitt in der Nähe der Schneidkante (14a) der Wegwerf- Schneidplatte (14) in Kontakt kommt.

6. Rotationsschneidvorrichtung (1) des Wegwerftyps zum Schneiden eines Gegenstandes (18) durch eine Schneidkante (14a), die auf einer Wegwerf-Schneidplatte (14) ausgebildet ist, mit:
einem Montagetisch (16), an dem der zu schneidende Gegenstand (18) befestigt wird;
einem Schneidplattenhalter (12) nach einem der Ansprüche 1 bis 5;
einem Antriebsabschnitt (10), der das zweite Ende des Schneidplattenhalters (12) hält, während das erste Ende des Schneidplattenhalters dem am Montagetisch befestigten Gegenstand zugewandt ist, und den Schneidplattenhalter um seine Mittelachse (12a) dreht; und
einer Kühlmittelzufuhreinheit zum Zuführen eines Kühlmittels zum Einlasspfad (32) über die Öffnung des Schneidplattenhalters.

## Revendications

1. Porte-plaquette qui est formé selon une forme cylindrique ayant une première extrémité et une seconde extrémité et qui est adapté pour maintenir une plaquette jetable (14) ; ledit porte-plaquette (12) comprenant :
(a) une section de support (30) qui est formée sur la première extrémité du porte-plaquette (12) et adaptée pour maintenir la plaquette jetable (14), dans lequel la section de support (30) est formée selon une forme de boîte avec une ouverture (34a) du côté d'installation de la plaquette jetable (14) et est configurée pour venir en contact avec la plaquette jetable (14) ;
(b) une trajectoire d'entrée (32) qui est formée le long d'un axe central (12a) à l'intérieur du porte-plaquette (12) et a une ouverture (13) sur la seconde extrémité du porte-plaquette, dans lequel du réfrigérant est amené extérieurement à la trajectoire d'entrée (32) par l'ouverture (13) ;
(c) une section d'échange de chaleur (34) qui est formée comme faisant partie de la trajectoire d'écoulement pour le réfrigérant en utilisant la forme de boîte de la section de support (30) avec l'ouverture (34a) et se raccorde à la trajectoire d'entrée (32), dans lequel l'échange de chaleur entre le réfrigérant qui est amené à partir de la trajectoire d'entrée (32) et la plaquette jetable (14) est réalisé dans la section d'échange de chaleur (34) ; et
(d) une trajectoire de décharge (36) qui est formée à l'intérieur du porte-plaquette (12), se raccorde à la section d'échange de chaleur (34) et décharge le réfrigérant après l'échange de chaleur,
(e) dans lequel la section d'échange de chaleur (34) comprend un espace scellé (30c) agencé entre la section de support (30) et une surface d'installation (14b) de la plaquette jetable (14), et
(i) dans lequel l'ouverture (34a) fait face au moins à la zone plus proche de l'arête de coupe (14a) que d'une section d'extrémité (14e) de la plaquette jetable (14) différente de l'arête de coupe (14a),
ou bien
(ii) dans lequel le volume de l'espace scellé (30c) le plus proche de l'arête de coupe (14a) est supérieur au volume de l'espace scellé (30c) au niveau de la section de coupe (14e) différente de l'arête de coupe (14a) de la plaquette jetable (14).

2. Porte-plaquette selon la revendication 1, dans lequel:
la trajectoire de décharge a une première extrémité et une seconde extrémité, dans lequel la première extrémité se raccorde à la section d'échange de chaleur (34) et la seconde extrémité décharge le réfrigérant après l'échange de chaleur.

3. Porte-plaquette selon la revendication 2, dans lequel:
la seconde extrémité de la trajectoire de décharge (36) est configurée pour avoir une ouverture vers la circonférence externe du porte-plaquette ; et
le réfrigérant devient un gaz au moins après l'échange de chaleur, et il est déchargé dans l'atmosphère depuis l'autre extrémité de la trajectoire de décharge.

4. Porte-plaquette selon la revendication 1, 2 ou 3, dans lequel :
la section d'échange de chaleur (34) a une trajectoire d'écoulement qui amène le réfrigérant qui est amené par la trajectoire d'entrée (32), en contact avec la plaquette jetable (14).

5. Porte-plaquette selon la revendication 1, 2, 3 ou 4, dans lequel :
la section d'échange de chaleur (34) est formée de sorte que le réfrigérant qui est amené par la trajectoire d'entrée (32), vient en contact avec une partie proche de l'arête de coupe (14a) de la plaquette jetable (14).

6. Appareil de coupe rotatif de type jetable (1) pour découper un objet (18) par une arête de coupe (14a) qui est formée sur une plaquette jetable (14), comprenant :
une table de support (16) sur laquelle l'objet (18) qui est découpé, est fixé ;
un porte-plaquette (12) selon l'une quelconque des revendications 1 à 5,
une section d'entraînement (10) qui maintient le côté de la seconde extrémité du porte-plaquette (12) alors que la première extrémité du porte-plaquette fait face à l'objet qui est fixé sur la table de support, et entraîne et fait tourner le porte-plaquette autour de son axe central (12a) ; et
une unité d'alimentation en réfrigérant pour amener le réfrigérant à la trajectoire d'entrée (32) par l'ouverture du porte-plaquette.
